Europäisches Patentamt

European Patent Office

Office européen des brevets

(19)

(11) Numéro de publication : **0 000 450**
**B1**

(12)

# FASCICULE DE BREVET EUROPÉEN

(45) Date de publication du fascicule du brevet :
25.03.81

(51) Int. Cl.³ : **G 03 B 27/54, G 03 B 27/40**

(21) Numéro de dépôt : **78400010.1**

(22) Date de dépôt : **01.06.78**

(54) **Appareils de reproduction photographique de documents transparents, notamment du type agrandisseur photographique.**

(30) Priorité : **03.06.77 FR 7716947**

(43) Date de publication de la demande :
**24.01.79 (Bulletin 79/02)**

(45) Mention de la délivrance du brevet :
**25.03.81 Bulletin 81/12**

(84) Etats contractants désignés :
**BE CH DE FR GB LU NL SE**

(56) Documents cités :
**FR - A - 1 021 016**
**US - A - 3 397 612**
**US - A - 3 834 813**
**US - A - 3 922 085**

(73) Titulaire : **ANVAR Agence Nationale de Valorisation de la Recherche**
**13, rue Madeleine Michelis**
**F-92522 Neuilly-sur-Seine (FR)**

(72) Inventeur : **Vulmiere, Huguette Nelly**
**62, Rue de l'Eglise**
**F-75015 Paris (FR)**
Inventeur : **Vulmiere, Jacques Claude**
**62, Rue de l'Eglise**
**F-75015 Paris (FR)**

(74) Mandataire : **Harlé, Robert et al**
**c/o Cabinet Harlé & Lechopiez 21, rue de la Rochefoucauld**
**F-75009 Paris (FR)**

Imprimerie Jouve, 17, rue du Louvre, 75001 Paris, France

« Appareils de reproduction photographique de documents transparents, notamment du type agrandisseur photographique »

La présente invention concerne les appareils de reproduction photographique de documents transparents en noir ou en couleurs tels les agrandisseurs pour la photographie amateur, professionnelle, et plus particulièrement les appareils fournissant des clichés tramés ou fond continu pour l'impression en quadrichromie.

Le principe optique de ces appareils est celui d'un agrandisseur photographique. Les éléments optiques comprennent une source lumineuse (qui peut être associée à un miroir parabolique et à un verre diffusant), un condenseur et des objectifs interchangeables de longueurs focales diverses.

Selon les types d'appareils, le plan-objet est fixe et le plan-image est mobile, ou bien le plan-objet est mobile et le plan image est fixe. Chacun de ces deux types présente des avantages et des inconvénients.

Dans le cas du plan-objet fixe, on déplace le plan-image, le plan-objet étant à hauteur d'homme. Les documents et les masques se trouvent sur un plan de travail fixe à hauteur d'homme, ce qui facilite les manipulations. Par contre, étant donné le faible écart maximal qui est ainsi imposé entre les deux plans objet et image, on peut atteindre des angles de champ de 60°.

Dans le cas d'un plan-objet mobile et du plan-image fixe, l'angle de champ est généralement inférieur à 60°. Par contre, les documents sont parfois peu accessibles, ce qui rend les manipulations des masques difficiles.

Les appareils fournissant des clichés destinés à l'imprimerie comprennent également une source d'exposition auxiliaire destinée à aplatir les contrastes au niveau du film à impressionner. Ce système auxiliaire peut être constitué par un dispositif balayant le plan-image avant la prise de vue au moyen d'une source tubulaire ou par une source annulaire ou une couronne de fibres optiques placée autour de l'objectif.

Le but de l'invention est de proposer un appareil permettant d'augmenter les formats maximaux utilisables pour atteindre par exemple un format de $20 \times 25$ cm pour l'original et $50 \times 65$ cm pour la reproduction ; cette invention offre en outre la possibilité de photométrer un point quelconque du plan-image lorsque les sources principale et auxiliaire sont allumées simultanément.

Dans le cours de la description donnée ci-après, on rappellera les problèmes photométriques posés par les appareils du type agrandisseur.

Le but à atteindre est également l'obtention d'un éclairement uniforme dans le plan de reproduction.

On peut résumer les conditions indispensables à cette obtention de la manière suivante :

En ce qui concerne la source, celle-ci doit être assimilable à une source plane et placée perpendiculairement à l'axe optique du système et avoir de préférence une luminance uniforme tout en rayonnant suivant la loi de LAMBERT.

En ce qui concerne le condenseur, celui-ci doit être de grandes dimensions pour couvrir les formats maximaux imposés, bien corriger les aberrations, en particulier sphériques et chromatiques, afin d'obtenir rigoureusement dans le plan de la pupille des objectifs une excellente image de la source.

En ce qui concerne le système de réglage des dimensions de l'image de la source dans le plan de la pupille des objectifs, il faut que celui-ci permette de choisir à volonté, suivant les caractéristiques ou les défauts de l'original, un éclairage du type dit en lumière diffuse, semi-dirigée ou dirigée, l'image de la source dans le plan de la pupille devant être respectivement supérieure, égale ou inférieure au diamètre de l'objectif utilisé.

Il faut prévoir un écran correcteur de l'influence de l'inclinaison $\alpha$ du pinceau utile sur l'axe du système qui soit unique si possible, quels que soient les objectifs et agrandissements exigés, et qui travaille en incidence normale pour tous les points de champ afin de faciliter le calcul et la mesure de l'absorption aux différents points de l'écran correcteur du facteur $\cos^4 \alpha$.

En ce qui concerne la source d'éclairage auxiliaire, celle-ci doit produire un éclairement uniforme compte-tenu du facteur $\cos^4 \alpha$, quel que soit l'emplacement du plan de reproduction, et permettre de photométrer le plan lorsqu'elle l'irradie simultanément avec la source principale.

Afin de répondre à ces diverses exigences, l'invention a pour objet un appareil de reproduction photographique de documents transparents en noir ou en couleurs de type comprenant une source lumineuse principale colorée ou non, un condenseur, des objectifs interchangeables, des plans objet et image mobiles l'un par rapport à l'autre, caractérisé en ce que la source principale est une source plane mise au point dans le plan de la pupille de l'objectif et est constituée par une source de lumière, un disque en verre à faces plan-parallèles ou plan-concave, dont l'une ou les deux faces sont dépolies, le condenseur est constitué de deux lentilles à échelons travaillant pour leur foyer et l'infini, entre lesquelles est disposé un écran correcteur des variations d'éclairement dans le plan image dues à l'inclinaison du pinceau utile sur l'axe du système, cet écran étant traversé perpendiculairement par le pinceau utile et les éléments constitutifs de la source, du condenseur et de l'objectif utilisé sont fixes les uns par rapport aux autres et déplaçables d'un seul bloc relativement au document à reproduire en fonction de la focale dudit objectif et du format du document.

Suivant un autre mode de réalisation de l'invention, un diaphragme, comportant plusieurs trous, des filtres colorés et des verres correcteurs d'aberrations chromatiques des lentilles à échelons, sont placés contre le disque en verre dépoli.

Suivant un autre mode de réalisation de l'invention, l'appareil comporte une source d'exposition auxiliaire constituée par une source fluorescente annulaire à luminance réglable sans changement de sa température de couleur, logée dans un boîtier, dans le fond duquel est disposé un élément éclairé par ladite source fluorescente annulaire, un objectif formé par un ménisque formant l'image de l'élément éclairé dans le plan moyen de reproduction, un écran tubulaire co-axial au ménisque interposé entre la source annulaire et ledit élément et un tronc de cône réfléchissant intérieurement pour supprimer l'effet d'œil de chat au niveau de la pupille de sortie de l'objectif.

Dans un autre mode de réalisation, la source d'exposition auxiliaire est constituée par une source fluorescente annulaire à luminance réglable sans changement de sa température de couleur, logée dans un boîtier dans le fond duquel est disposé un élément éclairé par ladite source fluorescente annulaire, un objectif formé par un ménisque formant l'image d'un écran correcteur du terme $\cos^4 \alpha$ placé contre et avant une lentille de champ dont le foyer est confondu avec l'image de la pupille avant du ménisque, cette pupille avant étant constituée par la petite base d'un tronc de cône réfléchissant intérieurement. L'élément éclairé est soit un écran blanc diffusant, plan ou sphérique dont la position est réglable suivant l'axe de la source fluorescente annulaire, soit un écran opalin transparent à l'arrière duquel est disposé un écran opaque blanc à dégradé radial comportant en son centre une ouverture pour la mise en place d'une cellule photo-électrique d'asservissement de l'intensité de la source fluorescente annulaire. La source auxiliaire comporte en outre dans le plan de la pupille avant un diaphragme d'ouverture variable suivi d'écrans colorés.

La possibilité de photométrage, le système de réglage des dimensions de l'image de la source de lumière et la source auxiliaire ne sont pas obligatoires pour atteindre le but de la présente invention, à savoir « rendre les grands formats utilisables en améliorant l'uniformité de l'éclairement et la maniabilité de l'appareil » mais ils présentent plutôt des avantages supplémentaires pour la reproduction en photogravure.

D'autres avantages ressortiront de la description qui va suivre de modes de réalisation d'un appareil selon l'invention, description donnée à titre d'exemple uniquement et en regard des dessins annexés sur lesquels :

Figs. 1 et 2 illustrent les problèmes de variations d'éclairement dans le plan-image dues à l'inclinaison $\alpha$ du pinceau utile sur l'axe du système.

Figs. 3 à 6 illustrent les problèmes de variations d'éclairement dans le plan-image liées à celles de la pupille de l'objectif de projection.

Fig. 7 représente le schéma optique d'un appareil selon l'invention.

Figs. 8 et 9 illustrent les possibilités de correction de la mise au point de l'appareil selon l'invention.

Figs. 10 et 11 représentent schématiquement deux systèmes de correction du chromatisme des lentilles minces utilisées dans l'appareil de l'invention.

Fig. 12 représente en coupe un mode de réalisation d'une source principale de l'appareil selon l'invention.

Fig. 13 représente une variante de réalisation de la source principale.

Fig. 14 représente une coupe suivant la ligne XIV-XIV du dispositif de la figure 13.

Fig. 15 représente en coupe une autre variante de réalisation de la source principale.

Fig. 16 représente en coupe la source principale de la figure 15 modifiée.

Fig. 17 représente en coupe une variante préférée de réalisation de la source principale.

Fig. 18 représente schématiquement la disposition de la source auxiliaire de l'appareil selon l'invention.

Fig. 19 représente en coupe un mode de réalisation de la source auxiliaire.

Fig. 20 représente schématiquement une variante de réalisation de la source auxiliaire.

Fig. 21 représente une autre variante de réalisation de la source auxiliaire.

On va tout d'abord rappeler les problèmes photométriques qui se posent dans le cas des agrandisseurs photographiques dont l'appareil selon l'invention fait partie.

En premier lieu, au niveau du dispositif d'éclairage, on forme l'image d'une source dans la pupille d'un objectif de projection au moyen d'un condenseur.

Dans les dispositifs classiques, la distance entre l'original et le condenseur est faible et constante.

Le condenseur est en général composé de deux lentilles plan-convexes à faces sphériques ou asphériques. Dans quelques systèmes de projection, tels les « rétro-projecteurs », ces lentilles sont remplacées par des lentilles moulées à échelons (type « FRESNEL »). Les performances de ces appareils sont cependant insuffisantes pour la réalisation de clichés photographiques.

Ainsi, le brevet US 3.834.813 mentionne l'emploi d'un condenseur constitué de deux lentilles à échelons travaillant pour leur foyer et l'infini dans un appareil de reproduction photographique.

Dans tous ces cas, lors des variations de grandissements, le réglage de l'image de la source dans la pupille de l'objectif s'effectue par déplacement de la source le long de l'axe du système avec ou sans changement de condenseur, celui-ci étant constamment placé contre l'original.

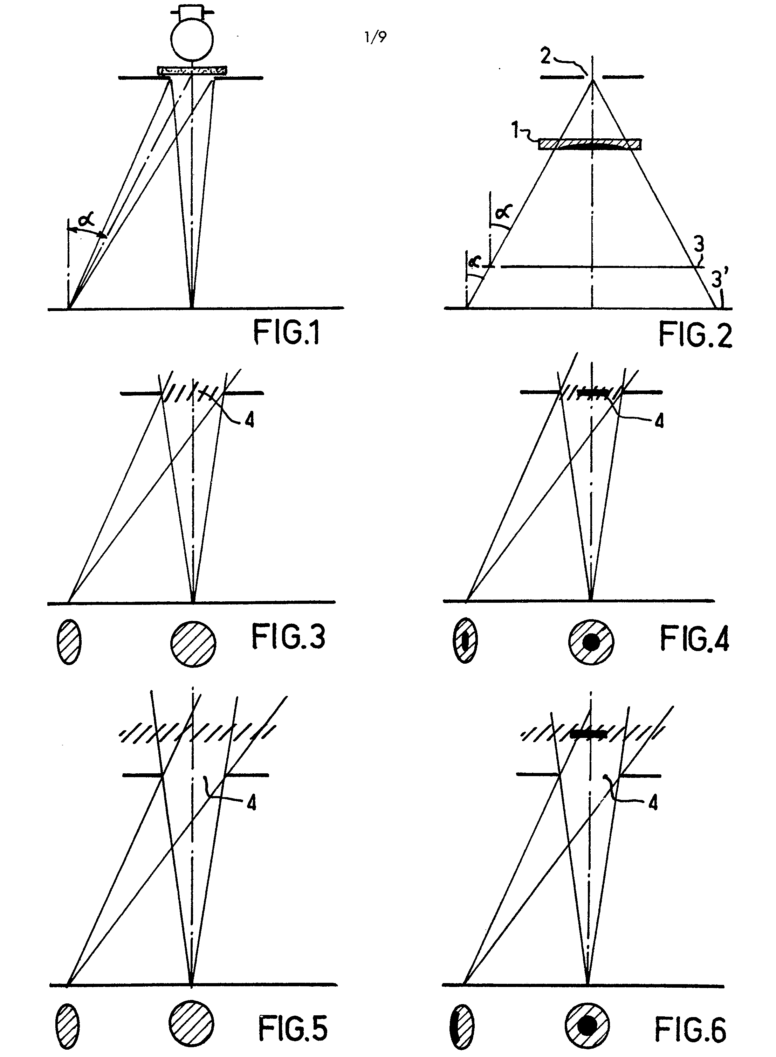

Avec les dispositifs classiques d'éclairage, on observe des variations d'éclairement dans le plan image dues à l'inclinaison $\alpha$ du pinceau utile sur l'axe du système (figure 1).

Dans le cas d'une source circulaire plane diffusante (assimilable à la pupille d'un objectif de projection, uniformément éclairée), on pourrait compenser la diminution de l'éclairement due à l'inclinaison $\alpha$ à l'aide d'un écran correcteur 1 disposé à une certaine distance en dessous de la pupille 2 de l'objectif de projection, de manière à avoir dans le plan image 3 ou 3' un éclairement uniforme.

Cet écran correcteur 1 doit être calculé pour une distance donnée de la pupille 2 d'un objectif donné. Il en modifie les aberrations (aberrations sphériques, chromatisme, astigmatisme, distorsion) et apporte de la lumière parasite. De plus, il doit être réalisé avec une grande précision. En effet, il est obtenu par dépôt sous vide, afin de ne pas diffuser, et doit être déposé sur une lame plan-parallèle de qualité « optique » et protégé par une lame identique étant donné la fragilité des dépôts de très faible absorption.

Du fait de l'épaisseur variable du dépôt absorbant depuis le centre jusqu'à la périphérie de l'écran et du fait des incidences obliques variables des rayons lumineux, le calcul, la réalisation de cet écran et son étalonnage en transmission sont difficiles, en sorte qu'il s'agit d'une solution coûteuse et peu envisageable. L'emploi d'un écran à dégradé radial est indiqué dans le brevet US 3.922.085.

On constate également dans ces appareils des variations d'éclairement dans le plan-image, liées à celles de la pupille de l'objectif de projection et dues à la mauvaise qualité de l'image d'une source lumineuse par surcroît non plane.

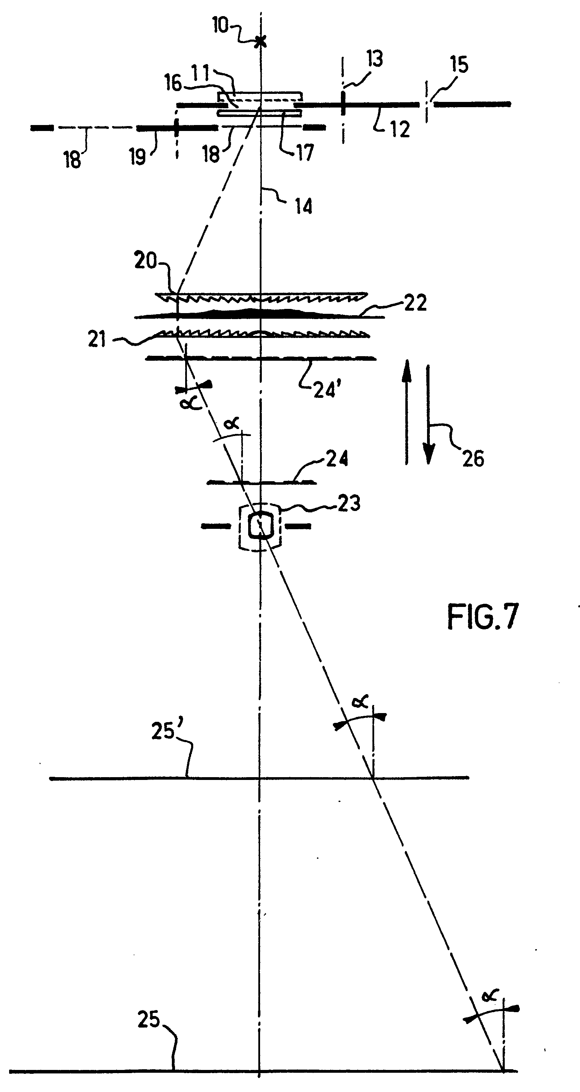

Les figures 3 et 4 illustrent les variations d'éclairement (compte non tenu de l'affaiblissement en $\cos^4 \alpha$) dans le cas d'une source plane de luminance uniforme et non uniforme respectivement, la source étant mise au point dans le plan de la pupille 4. Les ronds et ovales sur les figures 3 à 6 schématisent l'aspect de la pupille vu du centre ou du bord du champ.

Dans le cas de la figure 3, on obtient au niveau de l'image un éclairement uniforme. Il en est de même dans le cas de la figure 4. En effet, si les pupilles sont couvertes non uniformément, on observe cependant du centre ou du bord du champ la même loi de répartition de luminance dans le plan de la pupille.

Les figures 5 et 6 illustrent le cas d'une source mise au point en dehors du plan de la pupille avec respectivement une source de luminance uniforme et une source de luminance non uniforme.

Dans le cas de la figure 5, on a un éclairement uniforme si l'image de la source est de diamètre nettement supérieur à celui de la pupille 4. Ceci présente l'inconvénient qu'on ne peut choisir entre un éclairage diffus et un éclairage dirigé de l'original. Dans ce cas, l'éclairage de l'original est du type diffus au centre du champ et du type dirigé au bord du champ.

Dans le cas de la figure 6, il s'agit d'une source de luminance non uniforme et l'éclairement est également non uniforme.

Dans le cas d'une source non plane, de forme hélicoïdale par exemple, l'image de la source n'est pas uniforme. Elle ne se forme pas dans un plan unique, celui de la pupille par exemple. On se trouve alors dans un cas analogue à celui illustré par la figure 6 (éclairement non uniforme).

En résumé, les conditions indispensables à l'obtention d'un éclairement uniforme dans le plan de reproduction sont les suivantes :

*1. Source*

Elle doit être assimilable à une source plane, ayant une surface la plus grande possible afin de permettre l'éclairage du document original en lumière diffuse ; elle est placée perpendiculairement à l'axe optique du système et doit avoir de préférence une luminance uniforme et élevée, tout en rayonnant en chaque point suivant la loi de LAMBERT dans un angle solide $\alpha$ égal à celui du condenseur.

*2. Condenseur*

Il doit être de grandes dimensions pour couvrir les formats maximaux imposés et doit être bien corrigé des aberrations, en particulier sphériques et chromatiques, afin d'obtenir rigoureusement dans la pupille une excellente image de la source.

*3. Système de réglage*

Il faut prévoir un système de réglage des dimensions de l'image de la source dans la pupille, afin de choisir à volonté un éclairage diffus, semi-dirigé ou dirigé, suivant les caractéristiques ou les défauts de l'original.

*4. Ecran correcteur du terme $\cos^4 \alpha$*

Cet écran doit être unique, si possible, quels que soient les objectifs et grandissements exigés et doit travailler en incidence normale pour tous les points du champ.

*5. Source d'éclairage auxiliaire*

Elle doit être prévue afin de produire un éclairement uniforme et réglable compte-tenu du terme $\cos^4 \alpha$, quel que soit l'emplacement du plan de reproduction. Elle doit permettre de photométrer ce plan lorsqu'elle l'irradie simultanément avec la source principale, les deux sources pouvant être munies ou non d'écrans colorés.

La figure 7 représente le schéma optique d'un appareil conformément à l'invention, susceptible de satisfaire aux exigences rappelées ci-dessus.

Cet appareil est constitué d'une source de lumière 10, d'un verre dépoli 11 sur sa face extérieure plane pour obtenir une source de luminance plus uniforme que la source elle-même, et d'un diaphragme 12 au contact du dépoli. Ce diaphragme 12 est constitué par un disque rotatif autour d'un axe 13 parallèle à l'axe optique 14 du système. Sur la figure 7, on a représenté deux trous 15 et 16 dans le diaphragme 12. Le trou 16 est dans l'axe 14 du système et a un diamètre sensiblement supérieur à celui du trou 15.

Le diaphragme 12 est interposé entre le verre dépoli 11 et un verre 17 destiné à arrêter les infrarouges.

Derrière le verre 17 sont disposés les écrans colorés 18 montés sur un disque rotatif 19.

Le condenseur de l'appareil est constitué de deux lentilles à échelons 20 et 21 travaillant pour leur foyer et l'infini et entre lesquelles est disposé un écran 22 correcteur du terme $\cos^4 \alpha$, travaillant perpendiculairement à sa surface. Ces lentilles sont utilisées de préférence au grandissement 1 et sont alors identiques en vue de limiter les risques de moirage.

Le condenseur forme l'image de la source dans le plan des pupilles d'objectifs 23 de focales diverses.

On a représenté en 24 et 24' deux positions différentes du document à reproduire et en 25 et 25' les deux positions correspondantes du plan de reproduction.

Le trou 15 du diaphragme 12 a un diamètre inférieur aux pupilles des objectifs 23 et correspond à un éclairage dirigé, alors que le trou 16, qui est de diamètre supérieur, correspond à un éclairage diffus.

Les flèches 26 indiquent les sens de déplacement du document 24 selon le format.

En effet, conformément à l'invention, c'est le document 24 qui se déplace par rapport à l'ensemble formé par la source lumineuse, le condenseur et les objectifs.

L'écran 22 correcteur du terme $\cos^4 \alpha$ peut être constitué de différentes manières. Il peut être formé par un dépôt de couches minces absorbantes, par le dépôt d'une couche de gélatine absorbante plus ou moins intensément selon que l'on se trouve plus ou moins proche du centre de l'écran, ou par un film photographique non tramé ou bien tramé avec une trame aléatoire, exposé puis développé. La qualité optique de cet écran a peu d'importance étant donné qu'il est placé avant l'objectif et l'original.

Dans le cas de la réalisation de cet écran 22 à l'aide de couches absorbantes, du fait que cet écran est disposé entre les deux lentilles 20 et 21 dans le faisceau parallèle, le dépôt des couches et l'étalonnage de l'écran en transmission sont nettement plus faciles à calculer et à mesurer que dans le cas de l'écran de la figure 2. Le dépôt peut être effectué sur une lame sans qualité « optique ».

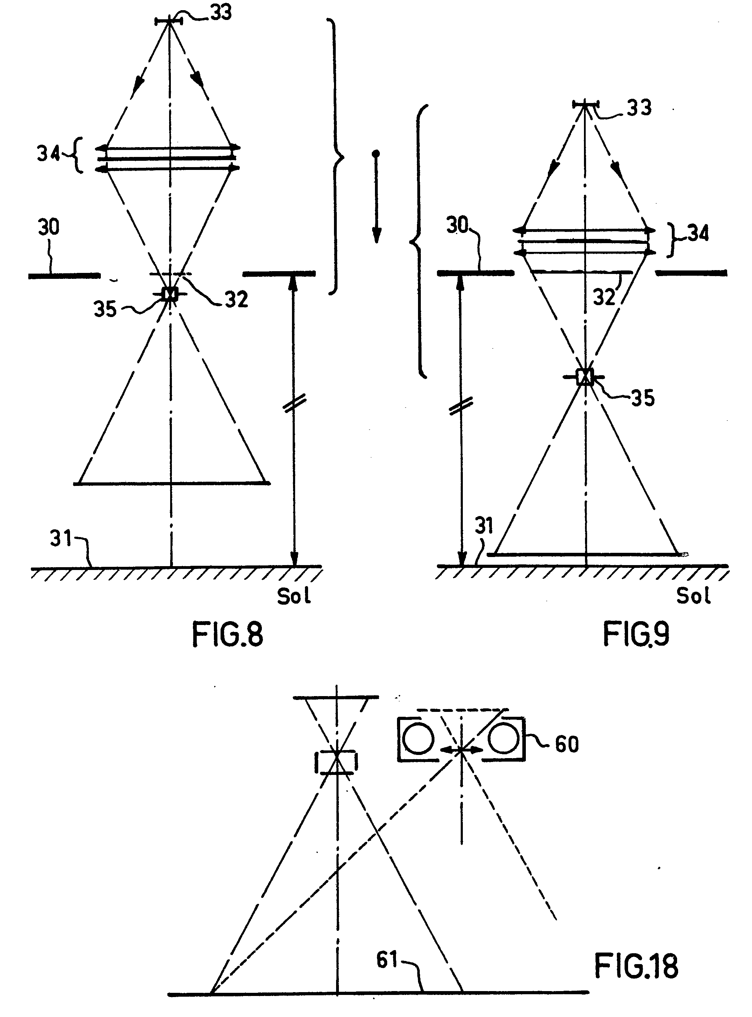

Les figures 8 et 9 illustrent les possibilités de correction de la mise au point de l'appareil selon l'invention en fonction des différents formats.

Sur ces figures, on a représenté en 30 le plan de travail du porte-document et en 31 le sol sur lequel repose l'appareil. Selon le format du document (32 ou 32'), on déplace d'un seul bloc l'ensemble formé par la source schématisée en 33, le condenseur 34 et l'objectif 35.

La conjugaison source-pupille de l'objectif est réalisée à la fabrication, et le déplacement de l'ensemble source-condenseur-objectif dans le cas du porte-document fixe peut être réalisé manuellement ou automatiquement.

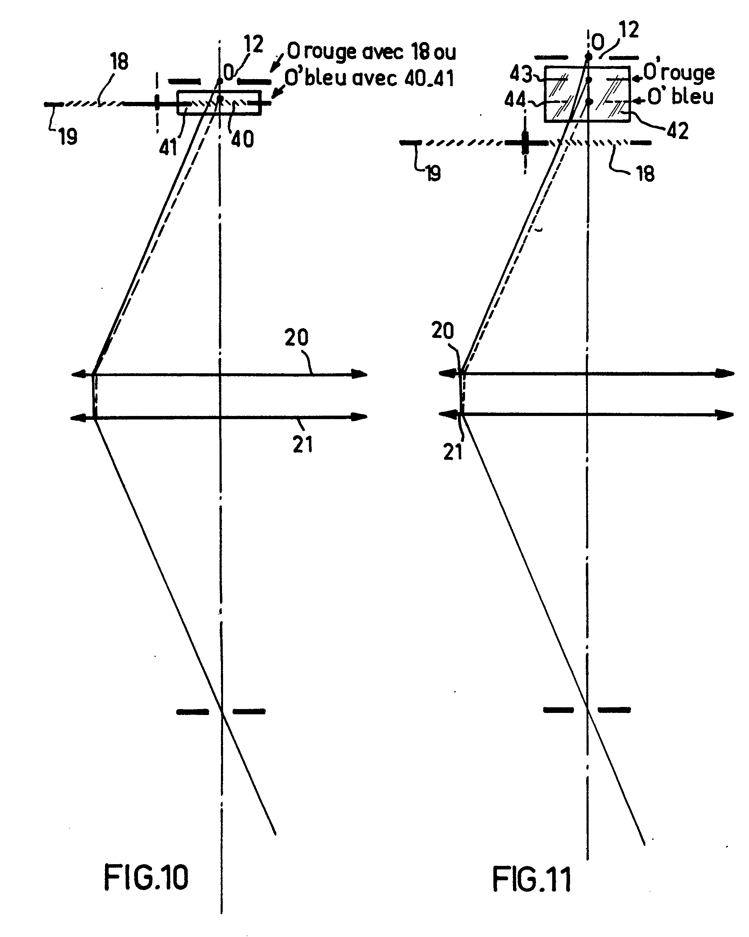

Les figures 10 et 11 représentent schématiquement deux systèmes de correction du chromatisme des lentilles 20 et 21. Ces corrections sont indispensables dans le cas de l'éclairage en lumière dirigée, mais ne le sont pas nécessairement dans le cas de l'éclairage en lumière diffuse. Dans le cas de la figure 10, ce système de correction du chromatisme est constitué par un écran coloré 40 enchâssé entre deux verres plan-parallèles épais 41 disposés derrière le diaphragme 12, la sur-correction des verres 41 compensant la sous-correction chromatique des lentilles 20 et 21.

Lors de l'utilisation, par exemple, de la lumière rouge, la mise au point est faite directement sur le diaphragme 12 (0 rouge avec l'écran 18). Dans le cas de la lumière bleue, la mise au point est effectuée sur l'image 0' du diaphragme au travers de l'ensemble correcteur 40-41.

Dans le cas de la figure 11, le système de correction est constitué d'un verre plan-parallèle 42 de dispersion et d'épaisseur convenables, un écran coloré 18 pouvant venir se placer devant le verre correcteur 42. Celui-ci est chargé de corriger la sous-correction des lentilles 20 et 21.

Sur la figure 11, les plans 43 et 44 sont les images rouge et bleue du diaphragme 12 au travers du verre correcteur 42 et correspondent aux foyers des lentilles 20 et 21.

La source de lumière est une source XENON pulsée standard de forme hélicoïdale 50. La source 50 est entourée d'un tronc de cône réfléchissant intérieurement 51, cependant que dans l'axe des spires de la source est disposé un cône réfléchissant extérieurement 52.

Le dispositif est complété par une lentille divergente dépolie 53 et un diaphragme 54.

La lentille divergente 53 a pour but de diminuer l'épaisseur apparente de la forme hélicoïdale 50 et de rapprocher son image du dépoli afin de simuler le plus possible une source plane, cependant que le tronc de cône 51 et le cône 52 ont pour but d'augmenter la luminance et son uniformité à la surface dépolie de la lentille 53.

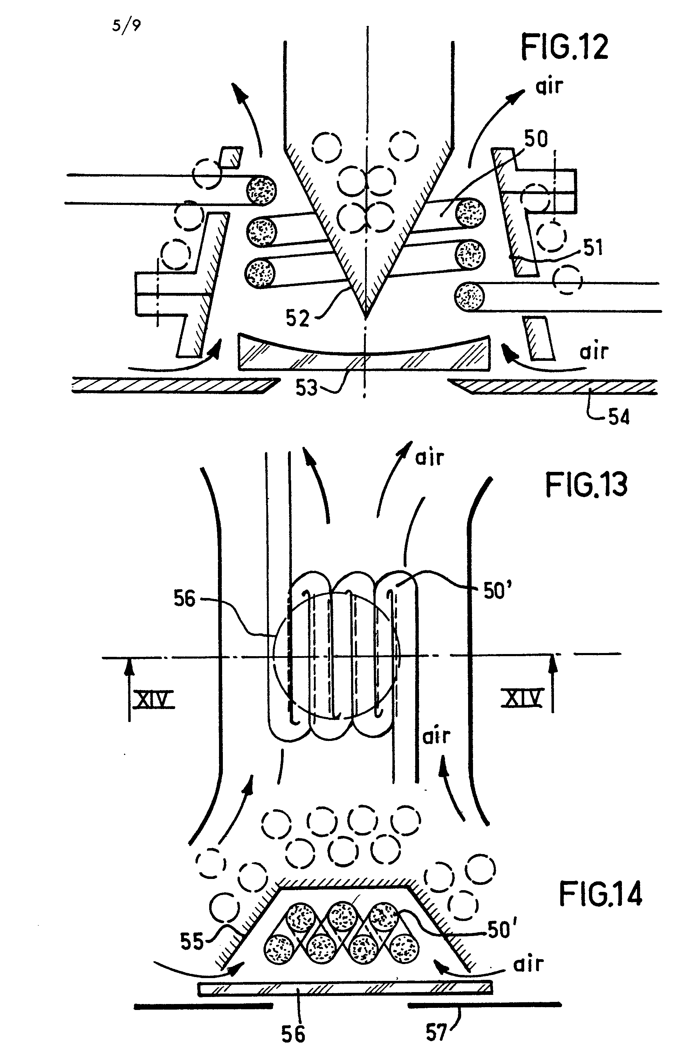

Les figures 13 et 14 illustrent une variante de réalisation de la source principale.

Suivant cette variante, on utilise une source XENON pulsée 50' dont l'enroulement du tube suit une autre disposition. Les spires sont allongées, parallèles entre elles et disposées en quinconce suivant une coupe transversale (figure 14). Le système est complété par un miroir 55 à section en forme d'auge, par un verre dépoli 56 et un diaphragme 57. Cette variante permet d'obtenir une plus grande uniformité, une plus grande luminosité du verre dépoli ainsi qu'un refroidissement par air plus aisé.

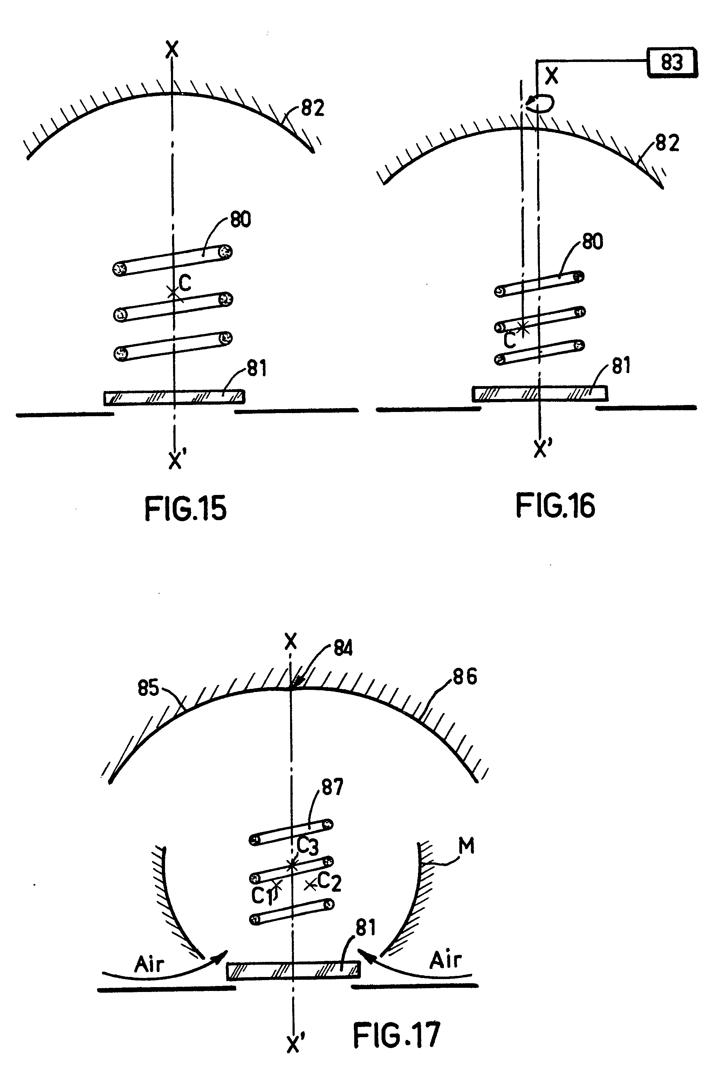

La figure 15 illustre une autre forme de réalisation de la source principale.

On dispose à cet effet d'une source XENON pulsée standard de forme hélicoïdale 80 disposée derrière un verre dépoli 81. Pour améliorer l'éclairement au niveau du dépoli 81, on dispose derrière la source un miroir sphérique concave 82 réfléchissant intérieurement de façon à obtenir un système de révolution, c'est-à-dire que l'axe XX' du tube hélicoïdal constituant la source XENON est confondu avec l'axe du système optique et celui du miroir sphérique dont le centre C se trouve à l'intérieur dudit tube hélicoïdal.

Avec une source principale du genre représenté à la figure 15, il peut encore exister au centre du verre dépoli 81 une zone sombre.

Cette zone peut être atténuée en utilisant le montage représenté sur la figure 16. On dispose comme pour le montage de la figure 15 d'une source XENON pulsée de forme hélicoïdale 80, d'un miroir sphérique 82 de centre C et d'un verre dépoli 81. Mais, dans ce cas, on décentre légèrement le miroir 82, ce qui décale latéralement l'image de la source mais supprime la symétrie de révolution. Pour rétablir cette symétrie, on fait tourner le miroir 82 autour de l'axe XX' du tube XENON tel qu'indiqué par la flèche à l'aide d'un moteur 83 ou de tout dispositif similaire. On obtient ainsi une meilleure uniformité d'éclairement du verre dépoli 81. Une telle construction est plus difficile à réaliser mécaniquement. En outre, l'éclairement obtenu n'est pas de révolution à un instant donné.

Le montage de source principale de la figure 17 permet d'éviter une telle rotation du miroir sphérique. On remplace à cet effet le miroir sphérique décentré mobile de la figure 16 par un miroir torique fixe concave 84 réfléchissant intérieurement de manière à obtenir un système de révolution. Les centres $C_1$ et $C_2$ respectivement des parties de tore 85 et 86 ont été choisis légèrement excentrés par rapport à l'axe XX' du tube XENON de forme hélicoïdale standard 87 et sont situés de telle manière que les images fournies par les diverses régions du miroir se reforment légèrement agrandies de part et d'autre du plan du verre dépoli 81 et de l'axe XX'.

On peut encore améliorer ce montage de source principale avec un miroir torique en y prévoyant un second miroir M, sphérique et concave, réfléchissant intérieurement. Le centre $C_3$ de ce second miroir se trouve sur l'axe XX' du tube XENON. Ce miroir M est placé face au miroir torique 84 et entoure la source 87.

La présence du miroir M permet une augmentation supplémentaire de l'éclairement de la « source plane » par récupération de faisceaux lumineux situés hors du champ du miroir torique. Ce miroir sphérique M présente deux autres avantages : d'une part il facilite la circulation d'air autour du tube de forme hélicoïdale, donc son refroidissement, et, d'autre part, il intercepte des faisceaux qui, sans ledit miroir, fourniraient de la lumière parasite autour de l'appareil.

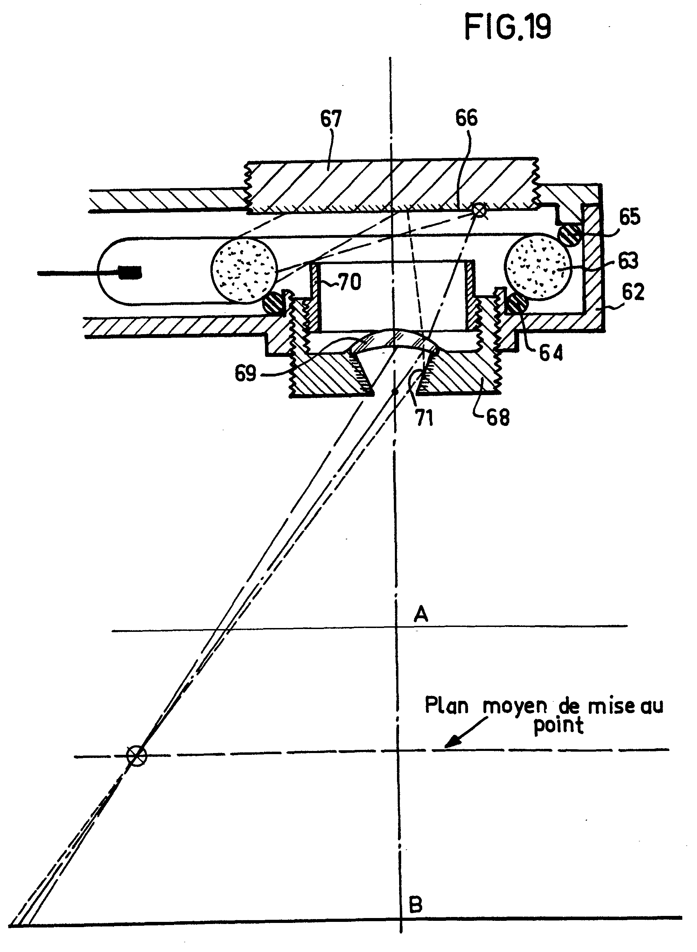

La figure 18 montre l'emplacement d'une source auxiliaire 60 dans l'appareil selon l'invention en vue d'éclairer uniformément le plan de reproduction 61.

La figure 19 représente en coupe un mode de réalisation de cette source auxiliaire.

Elle comprend un boîtier 62 dans lequel est enfermée une source fluorescente annulaire 63 maintenue en place par des joints de centrage 64 et 65.

Dans le fond du boîtier 62 est monté de manière amovible un écran blanc diffusant 66 plan ou sphérique. L'écran 66 est solidaire d'un bouchon 67 vissé dans le boîtier 62, ce qui permet de régler la distance entre l'écran 66 et la source fluorescente annulaire 63, l'écran 66 étant disposé dans l'axe de cette source. Dans le boîtier, à l'opposé de l'écran 66, est disposé, dans un barillet 68 vissé dans le boîtier 62, un objectif constitué par un ménisque 69.

Entre la source 63 et l'écran 66 est interposé un écran tubulaire 70 réglable suivant l'axe du système optique de manière à modifier la répartition des éclairements sur le plan diffusant.

Du côté du ménisque 69 opposé à l'écran 66, est prévu, sur les bords de ce ménisque, un tronc de cône réfléchissant 71 destiné à supprimer l'effet d'œil de chat au niveau de la pupille de sortie du ménisque 69.

Sur la figure 19, on a représenté en A et B les plans extrêmes de reproduction et en tiretés le plan moyen de mise au point.

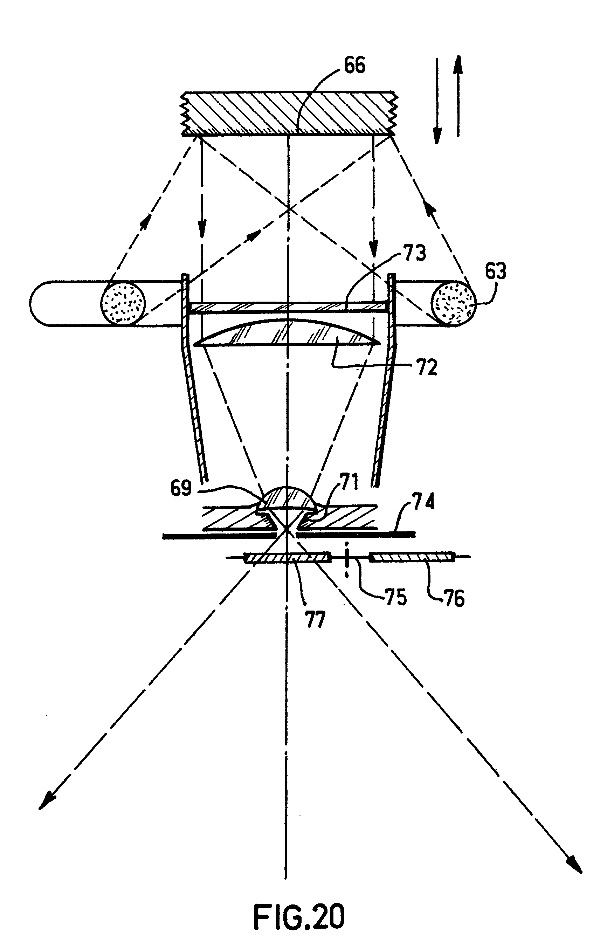

Suivant une variante de ce dispositif représentée à la figure 20, l'écran tubulaire 70 (figure 19) qui modifie la répartition lumineuse dans le plan de l'écran diffusant 66, peut être remplacé par une lentille de champ 72 et un écran correcteur 73 du terme $\cos^4 \alpha$. Le foyer de la lentille de champ 72 est conjugué de l'image de la pupille avant (petite base du tronc de cône 71) du ménisque 69. L'écran correcteur 73 est placé en faisceau parallèle contre la lentille de champ 72 entre celle-ci et l'écran diffusant. L'écran diffusant 66 est situé convenablement par rapport à la source annulaire 63 afin que son éclairement soit uniforme. La pupille avant de l'objectif peut être complétée par un diaphragme réglable 74 et par un disque 75 porteur de verres colorés 76-77.

Ces deux derniers dispositifs peuvent être prévus dans le mode de réalisation de la figure 19.

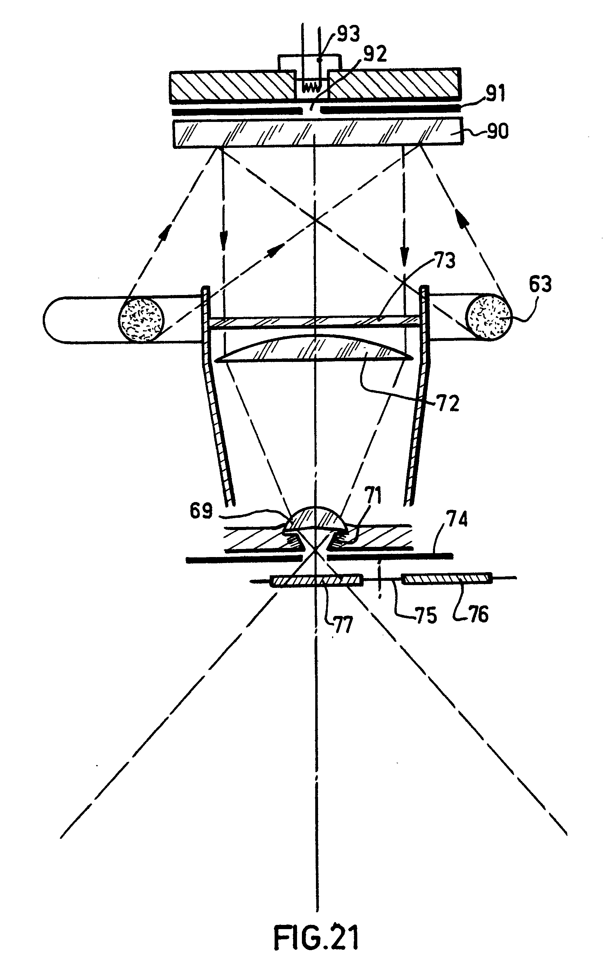

Selon une variante du dispositif de la figure 20, l'écran blanc diffusant 66 peut être remplacé par un disque 90 transparent, translucide ou opalin (figure 21) en verre synthétique, tel qu'un polyméthacrylate de méthyle, par exemple celui mis sur le marché sous la dénomination « Altuglas » par la Société Altulor (France). A l'arrière du disque 90 est disposé un écran opaque blanc 91 portant la reproduction d'un dégradé radial destiné à modifier la répartition de la luminance du disque 90. Cet écran 91 est obtenu par photographie ou par tout autre procédé approprié. Il est prévu en outre dans ce montage de source auxiliaire une cellule photo-électrique 93 placée derrière une ouverture 92 ménagée au centre de cet écran dégradé. Cette cellule sert à contrôler et à asservir l'intensité du tube lumineux 63. Par ailleurs, tous les autres éléments du montage de source auxiliaire de la figure 21 sont identiques à ceux de la figure 20. Ce dernier dispositif peut être prévu dans le mode de réalisation de la figure 19.

L'appareil objet de la présente invention permet d'obtenir un certain nombre d'avantages sur le plan pratique. Il permet notamment de réduire les temps de pose jusqu'à 10 fois par rapport aux appareils de la technique antérieure. Il permet en outre d'obtenir de très bonnes reproductions avec des sources 4 à 5 fois moins puissantes que celles de l'art connu, par exemple avec des sources de 5 KW. Il faut ajouter, comme déjà mentionné ci-dessus, qu'on peut, grâce à l'appareil selon l'invention, augmenter les formats maximaux utilisables pour atteindre par exemple un format de 20 × 25 cm pour l'original

et 50 × 65 cm pour la reproduction. L'appareil selon l'invention trouve une application dans le domaine industriel : pour effectuer une reproduction, seule la source principale est obligatoire (figure 7), mais, pour faire de la photo-gravure, il est indispensable de prévoir en outre une source auxiliaire (figures 18 à 21).

## Revendications

1. Appareil de reproduction photographique de documents transparents en noir ou en couleurs, du type comprenant une source lumineuse principale (33) colorée ou non, un condenseur (34), des objectifs (23, 35) interchangeables, des plans objet (24, 24') et image (25, 25') mobiles l'un par rapport à l'autre, caractérisé en ce que la source principale (33) est une source plane mise au point dans le plan de la pupille de l'objectif (35) et est constituée par une source de lumière (10), un disque en verre (11) à faces plan-parallèles ou plan-concave, dont l'une ou les deux faces sont dépolies, le condenseur (34) est constitué de deux lentilles (20, 21) à échelons travaillant pour leur foyer et l'infini, entre lesquelles est disposé un écran (22) correcteur des variations d'éclairement dans le plan image dues à l'inclinaison du pinceau utile sur l'axe du système, cet écran étant traversé perpendiculairement par le pinceau utile, et les éléments constitutifs de la source (33), du condenseur (34) et de l'objectif (35) utilisé sont fixes les uns par rapport aux autres et déplaçables d'un seul bloc relativement au document à reproduire en fonction de la focale dudit objectif (23, 35) et du format du document.

2. Appareil suivant la revendication 1, caractérisé en ce qu'un diaphragme (12), comportant plusieurs trous (15, 16), des filtres colorés (18, 40) et des verres (41, 42) correcteurs d'aberrations chromatiques des lentilles à échelons (20, 21) sont placés contre le disque en verre dépoli (11).

3. Appareil suivant la revendication 1, caractérisé en ce que ladite source de lumière (10) est constituée par une source XENON pulsée de forme hélicoïdale (50) entourée d'un tronc de cône (51) réfléchissant intérieurement et à l'intérieur de laquelle est disposé un cône (52) réfléchissant extérieurement, le verre dépoli (53) étant constitué par une lentille divergente.

4. Appareil suivant la revendication 1, caractérisé en ce que ladite source de lumière (10) est constituée par une source XENON pulsée (50') à spires allongées, parallèles entre elles et disposées en quinconce suivant un plan de section transversal aux spires, la source étant logée dans un miroir (55) de section en forme d'auge.

5. Appareil suivant la revendication 1, caractérisé en ce que ladite source de lumière (10) est constituée par une source XENON de forme hélicoïdale (87) derrière laquelle est disposé un miroir torique concave (84) réfléchissant intérieurement, dont les centres $C_1$ et $C_2$ sont légèrement décalés par rapport à l'axe de l'hélice constituant la source XENON (87).

6. Appareil selon la revendication 5, caractérisé en ce que la source XENON de forme hélicoïdale (87) est entourée par un miroir sphérique concave M, réfléchissant intérieurement, dont le centre $C_3$ est situé sur l'axe de l'hélice constituant la source XENON.

7. Appareil suivant l'une quelconque des revendications 1 à 6, caractérisé en ce qu'il comporte un dispositif de correction du chromatisme des lentilles à échelons (20, 21) constitué par une lame de verre (41) dans laquelle est enchâssé un écran coloré (40).

8. Appareil suivant l'une quelconque des revendications 1 à 6, caractérisé en ce qu'il comporte un dispositif de correction du chromatisme des lentilles à échelons (20, 21) constitué par une lame (42) de dispersion convenable compensant le chromatisme pour l'ensemble du spectre.

9. Appareil suivant l'une quelconque des revendications 1 à 8, caractérisé en ce que les deux lentilles à échelons (20, 21) sont identiques et travaillent avec un grandissement égal à 1.

10. Appareil suivant l'une quelconque des revendications 1 à 9, caractérisé en ce qu'il comporte une source d'exposition auxiliaire (60) constituée par une source fluorescente annulaire (63) à luminance réglable sans changement de sa température de couleur, logée dans un boîtier (62) dans le fond duquel est disposé un élément (66) éclairé par ladite source fluorescente annulaire (63), un objectif formé par un ménisque (69) formant l'image de l'élément (66) éclairé dans le plan moyen de reproduction, un écran tubulaire (70) coaxial au ménisque (69) interposé entre la source annulaire (63) et ledit élément (66), et un tronc de cône (71) réfléchissant intérieurement pour supprimer l'effet d'œil de chat au niveau de la pupille de sortie de l'objectif (69).

11. Appareil suivant l'une quelconque des revendications 1 à 9, caractérisé en ce qu'il comporte une source d'exposition auxiliaire (60) constituée par une source fluorescente annulaire (63) à luminance réglable sans changement de sa température de couleur, logée dans un boîtier (62) dans le fond duquel est disposé un élément (66) éclairé par ladite source fluorescente annulaire (63), un objectif formé par un ménisque (69) formant l'image d'un écran correcteur du terme $\cos^4 \alpha$ (73) placé contre et avant une lentille de champ (72) dont le foyer est confondu avec l'image de la pupille avant du ménisque (69), cette pupille avant étant constituée par la petite base d'un tronc de cône (71) réfléchissant intérieurement.

12. Appareil selon l'une quelconque des revendications 10 ou 11, caractérisé en ce que l'élément éclairé uniformément est un écran blanc diffusant (66), plan ou sphérique dont la position est réglable suivant l'axe de la source fluorescente annulaire (63).

13. Appareil selon l'une des revendications 10 ou 11, caractérisé en ce que l'élément éclairé uniformément est un écran opalin (90) transparent à l'arrière duquel est disposé un écran opaque blanc (91) à dégradé radial comportant en son centre une ouverture (92) pour la mise en place d'une cellule photo-électrique (93) d'asservissement de l'intensité de la source fluorescente annulaire.

14. Appareil suivant l'une quelconque des revendications 10 à 13, caractérisé en ce qu'il comporte en outre dans le plan de ladite pupille avant un diaphragme d'ouverture (74) variable suivi d'écrans colorés (76, 77).

## Claims

1. Apparatus for photographic reproduction of transparent documents in black or colours, of the type comprising a coloured or uncoloured main light source (33), a condenser (34), interchangeable objectives (23, 35), object planes (24, 24') and image planes (25, 25') movable with respect to one another, characterised in that the main source (33) is a plane source focused in the plane of the pupil of the objective (35) and comprised of a light source (10), a glass disc (11) with plane-parallel or plane-concave faces one or both of which are frosted, the condenser (34) is comprised of two echelon lenses (20, 21) operating at their focus and infinity, between which are disposed a corrector screen (22) for variations in illumination in the image plane due to the inclination of the effective pencil on the axis of the system, this screen being traversed perpendicularly by the effective pencil, and the component parts of the source (33), the condenser (34) and the objective (35) used are fixed with respect to one another and displaceable as a unit relative to the document to be reproduced as a function of the focal point of said objective (23, 35) and the format of the document.

2. Apparatus according to claim 1, characterised in that a diaphragm (12) comprising a plurality of holes (15, 16), coloured filters (18, 40) and chromatic aberration corrector lenses (41, 42) for the echelon lenses (20, 21) are placed against the frosted glass disc (11).

3. Apparatus according to claim 1, characterised in that said light source (10) is comprised of a pulsed XENON source of helical shape (50) surrounded by an inwardly reflecting truncated cone (51) and inside of which is disposed an outwardly reflecting cone (51), the frosted glass (53) being comprised of a divergent lens.

4. Apparatus according to claim 1, characterised in that said light source (10) is comprised of pulsed XENON source (50') with elongated turns parallel to one another and arranged in a quincunx along a sectional plane transverse to the turns, the source being housed in a mirror (55) of trough-shaped section.

5. Apparatus according to claim 1, characterised in that said light source (10) is comprised of a XENON source (87) of helical shape behind which is disposed an inwardly reflecting concave' toric mirror (84) whose centres $C_1$ and $C_2$ are slightly offset with respect to the axis of the helix comprising the Xenon source (87).

6. Apparatus according to claim 5, characterised in that the XENON source (87) of helical shape is surrounded by an inwardly reflecting concave spherical mirror M whose centre $C_3$ is located on the axis of the helix comprising the XENON source.

7. Apparatus according to any one of claims 1 to 6, characterised in that it comprises a device for correcting the chromatism of the echelon lenses (20, 21) comprised of a glass plate (41) in which is mounted a coloured screen (40).

8. Apparatus according to any one of claims 1 to 6, characterised in that it comprises a device for correcting the chromatism of the echelon lenses (20, 21) comprised of a suitable dispersion plate (42) compensating for the chromatism for the entire spectrum.

9. Apparatus according to any one of claims 1 to 8, characterised in that the two echelon lenses (20,21) are identical and operate with a magnification equal to 1.

10. Apparatus according to any one of claims 1 to 9, characterised in that it comprises an auxiliary exposure source (60) comprised of an annular fluorescent source (63) with adjustable luminance without changing its colour temperature, housed in a housing (62) in the bottom of which is disposed an element (66) lighted by the said annular fluorescent light source (63), a device formed by a meniscus (69) forming the image of the element (66) lighted in the middle reproduction plane, a tubular screen (70) coaxial to the meniscus (69) interposed between the annular source (63) and the said element (66) and an inwardly reflecting truncated cone (71) for eliminating the cat's eye effect at the level of the output pupil of the objective (69).

11. Apparatus according to any one of claims 1 to 9, characterised in that it comprises an auxiliary exposure source (60) comprised of an annular fluorescent source (63) with adjustable luminance without changing its colour temperature, housed in a housing (62) in the bottom of which is disposed an element (66) lighted by the said annular fluorescent source (63), a objective formed by a meniscus (69) forming the image of a corrector screen (73) for the term $\cos^4 \alpha$ placed against and in front of a field lens (72) whose focal point coincides with the image of the front pupil of the meniscus (69), this front pupil being comprised of the small base of an inwardly reflecting truncated cone (71).

12. Apparatus according to either one of claims 10 or 11, characterised in that the uniformly lighted element is a plane or spherical diffusing white screen (66) whose position is adjustable along the axis of the annular fluorescent source (63).

13. Apparatus according to either one of claims 10 or 11, characterised in that the uniformly lighted element is a transparent opaline screen (90) at the back of which is disposed a radially graduated white opaque screen (91) comprising at its centre an opening (92) for accommodating a photoelectric cell (93) for controlling the intensity of the annular fluorescent source.

14. Apparatus according to any one of claims 10 to 13, characterised in that it further comprises in the plane of the said front pupil a variable opening diaphragm (74) followed by coloured screens (76, 77).

## Ansprüche

1. Vorrichtung für die fotografische Reproduktion transparenter Schwarzweiss- oder farbiger Vorlagen, mit einer gegebenenfalls farbigen Hauptlichtquelle (33), einem Kondensor (34), auswechselbaren Objektiven (23, 35) zueinander beweglichen Objekt und Bildebenen (25, 25'), dadurch gekennzeichnet, dass die Hauptlichtquelle (33) eben ist und in der Eintrittsöffnungsebene des Objektivs abgerbildet ist, gebildet eine Beleuchtungsquelle (10) eine Scheibe (11) mit planparallelen oder plan/konkaven Seiten, von denen eine oder beide mattiert sind dass der Kondensor (34) aus zwei Stufenlinsen (20, 21) mit der jeweils anderen Linse abgewandtem Brennpunkt ausgebildet ist, zwischen denen ein Korrekturschirm 22 für die Veränderung der Ausleuchtung in der Bildebene infolge der Neigung des Belichtungsstrahls gegen die Achse des Systems, angeordnet ist, wobei der Korrekturschirm von dem wirksamen Lichtbündel senkrecht durchgegangen wird, wobei die die Quelle 33, den Kondensor 34' und das verwendete Objektiv 35 bildenden Bauteile relativ zueinander ortsfest sind und als Baugruppe relativ zu der zu repräsentiereden Vorlage in Abhängigkeit von der Brennweite des Objektivs (23, 35) und des Formats der Vorlage verschieblich sind.

2. Vorrichtung nach Anspruch 1, dadurch gekennzeichnet, dass eine Blende mit Löcker (15, 16), Farbfilter (18, 40) und Korrekturgläser (41, 42) für chromatische Aberration der Stufenlinsen (20, 21), an die mattierte Glasscheibe (11) ansetzbar sind.

3. Vorrichtung nach Anspruch 1, dadurch gekennzeichnet, dass der Beleuchtungskörper 10 von einer gepulsten, spiralförmigen Xenonlampe 50 gebildet ist, umschlossen von einem, innen reflektierenden Kegelstumpf 51, in welcher Lampe ein aussen reflektierender Kegel 52 angeordnet ist, wobei das Mattglas 53 von einer Divergenzlinse gebildet ist.

4. Vorrichtung nach Anspruch 1, dadurch gekennzeichnet, dass der Beleuchtungskörper 10 von einer gepulsten, spiralförmigen Xenonlampe 50' gebildet ist, deren abgeflachte Windungen zueinander parallel sind und in einer zu den Windungen senkrechten Ebene zueinander versetzt gestaffelt liegen, wobei die Lampe in einem Spiegel 55 mit trogförmigem Querschnitt angeordnet ist.

5. Vorrichtung nach Anspruch 1, dadurch gekennzeichnet, dass der Beleuchtungskörper 10 von einer spiralförmigen Xenonlampe 87 gebildet ist, hinter der ein torischer konkaver innen reflektierender Spiegel 84 angeordnet ist, dessen Zentren $C_1$ and $C_2$ relativ zur Achse der die Xenonlampe 87 bildenden Spirale etwas versetzt sind.

6. Vorrichtung nach Anspruch 5, dadurch gekennzeichnet, dass die spiralförmige Xenonlampe 87 von einem sphärischen konkaven innen reflektierenden Spiegel M umschlossen ist, dessen Zentrum $C_3$ in der Achse der die Lampe bildenden Spirale liegt.

7. Vorrichtung nach einem der Ansprüche 1 bis 6, dadurch gekennzeichnet, dass sie eine Korrektureinrichtung für den Chromatismus der Stufenlinsen 20, 21 aufweist, gebildet von einer Glasplatte 41 mit eingelagertem Farbschirm 40.

8. Vorrichtung nach einem der Ansprüche 1 bis 6, dadurch gekennzeichnet, dass sie eine Korrektureinrichtung für den Chromatismus der Stufenlinsen (20, 21) aufweist, gebildet von einer passenden Dispersionsplatte mit Chromatismus-Kompensationsfähigkeit für das gesamte Spektrum.

9. Vorrichtung nach einem der Ansprüche 1 bis 8, dadurch gekennzeichnet, dass die Stufenlinsen untereinander gleich sind und einen Vergrösserungsfaktor 1 aufweisen.

10. Vorrichtung nach einem der Ansprüche 1 bis 9, dadurch gekennzeichnet, dass sie eine Hilfsbelichtungslichtquelle 60 aufweist, gebildet von einer ringförmigen Fluoreszenzlampe 63 mit ohne Änderung der Farbtemperatur einstellbarer Lichtstärke, angeordnet in einem Gehäuse 62, in dessen Boden ein von der Fluoreszenzlampe beleuchtetes Element 66 angeordnet ist, dass ein von einer Meniskuslinse gebildetes Objektiv 69 vorgesehen ist, mittels dem das beleuchtete Element 66 in die mittlere Reproduktionsebene abgebildet wird, dass ein rohrförmiger, zur Meniskuslinse 69 koaxialer Schirm 70 zwischen der ringförmigen Fluoreszenzlampe 63 und dem beleuchteten Element 66 angeordnet ist, und dass ein innen reflektierender Kegelstumpf 71 vorgesehen ist zum Unterdrücken des Katzenaugeneffekts in Höhe der Austrittsöffnung des Objektivs 69.

11. Vorrichtung nach einem der Ansprüche 1 bis 9, dadurch gekennzeichnet, dass sie eine Hilfsbelichtungslichtquelle 60 aufweist, gebildet von einer ringförmigen Fluoreszenzlampe 63 mit ohne Änderung der Farbtemperatur einstellbarer Lichtstärke, angeordnet in einem Gehäuse 62, in dessen Boden ein von der ringförmigen Fluoreszenzlampe 63 beleuchtetes Element 66 angeordnet ist, dass ein Objektiv 69 in Form einer Meniskuslinse vorgesehen ist, das ein Bild eines das glied cos α korrigierenden Schirms 73 erzeugt, der vor einer Feldlinse 72 und an dieser anliegend angeordnet ist, wobei der Brennpunkt der Feldlinse mit dem Bild der vorderen Offnung der Meniskuslinse 69 zusammenfällt, welche Öffnung von der Kleineren Fläche eines innen reflektierenden Kegelstumpfs 71 gebildet ist.

12. Vorrichtung nach Anspruch 10 oder 11, dadurch gekennzeichnet, dass das gleichförmig beleuchtete Element von einem weissen diffundierenden Schirm 66 gebildet ist, der eben oder sphärisch ist und dessen Position längs der Achse der ringförmigen Fluoreszenzlampe 63 einstellbar ist.

13. Vorrichtung nach Anspruch 10 oder 11, dadurch gekennzeichnet, dass das gleichförmig Element beleuchtete Element ein durchscheunender Milchglasschrim 90 ist, auf dessen Rückseite ein opaker weisser Schirm 91 mit Radialdegradation und einer Mittelöffnung 93 angebracht ist, in der eine fotoelektrische Zelle 93 zum Regeln der Intensität der ringförmigen Fluoreszenzlampe positionierbar ist.

14. Vorrichtung nach einem der Ansprüche 10 bis 13, dadurch gekennzeichnet, dass sie in der Ebene der vorderen öffnung eine Blende 74 mit variabler öffnung aufweist, gefolgt von Farbschirmen (76, 77).

0 000 450

1/9

FIG.1

FIG.2

FIG.3

FIG.4

FIG.5

FIG.6

FIG.7

FIG.8

FIG.9

FIG.18

O rouge avec 18 ou
O' bleu avec 40.41

18

12

0

19

41    40

20

21

**FIG.10**

0    12

43

44

O' rouge
O' bleu

19    18    42

20

21

**FIG.11**

FIG.12

air

50

51

52

air

53

54

air

FIG.13

56

50'

XIV

XIV

air

air

FIG.14

55

50'

air

56

57

FIG.15

FIG.16

FIG.17

# FIG.19

Plan moyen de mise au point

A

B

FIG.20

FIG.21